# EUROPEAN PATENT SPECIFICATION

(11) **EP 3 078 201 B1**
(45) Date of publication and mention of the grant of the patent: **25.12.2019**
(21) Application number: 14816522.8
(22) Date of filing: 28.11.2014
(51) Int. Cl.: H04N 21/254, H04N 21/4627

(54) **MOBILE DEVICE GENERATED SHARING OF CLOUD MEDIA COLLECTIONS**
DURCH TEILUNG VON CLOUD-MEDIENSAMMLUNGEN ERZEUGTE MOBILVORRICHTUNG
PARTAGE DE COLLECTIONS DE CONTENUS MULTIMEDIA EN NUAGE GÉNÉRÉ PAR DES DISPOSITIFS MOBILES

(30) Priority: 06.12.2013 US 201314099812
(43) Date of publication of application: 12.10.2016
(73) Proprietor: Microsoft Technology Licensing, LLC, Redmond, WA 98052-6399 (US)
(72) Inventor: PARUCHURI, Sandeep, Redmond, WA 98052-6399 (US); FREIBERG, Oren, Redmond, WA 98052-6399 (US); HOU, Justin, Redmond, WA 98052-6399 (US)
(74) Representative: Goddar, Heinz J.
(86) International application number: PCT/US2014/067805
(87) International publication number: WO 2015/084685

(56) References cited:
- EP-A1- 2 595 077
- WO-A1-03/098409
- WO-A1-2013/085517
- JP-A- 2007 328 398
- US-A1- 2011 296 454
- US-A1- 2013 297 385

## Description

### BACKGROUND

The use of digital media services over mobile communications networks has become increasingly popular as the number of users of mobile devices has increased. This has been particularly notable as the use of smartphones and tablets has increased. The increase in popularity of these digital media services has also been accompanied by constant advancement in the capabilities and the technologies of the devices, networks and systems used to provide these digital media services. Digital media services may be provided to end users by utilizing different types of interconnected networks having different communications capabilities such as, for example the internet, cellular networks, wifi, Bluetooth, etc. The services may be made available to many individual users each having different types of devices such as smart phones, tablets, desktop personal computers, laptops, or other types of music/video players. Also, individual users of a service may each have multiple types of devices that they use at different times.

The increase in popularity of digital media services has also resulted in creation of new service providers and in services coming into being. As a result of this creation of service providers it is increasingly likely that individual users, who may know each other and share interests in the same type of digital media, may each subscribe to different unrelated services for the same type of digital media, or one individual user may subscribe to more than one service for digital media where the services are unrelated. This proliferation of digital media services and the increase in the numbers of users of such services has also created social or business environments that increasingly likely may involve a user desiring to present and share digital media with other persons through a device of another person who may be a subscriber of the same or a different digital media service. This could be the case when the device of the other person is better suited to present particular media, for example, where the media is music and the device of the other person provides higher quality audio. It could also be desired to have the option to share media with multiple persons using different types of devices, where the users may also be subscribers to different unrelated services. Typically, in such an environment, the capabilities of a person's particular device and the rights which they are able to obtain from their digital media service provider may restrict or severely limit the ability to share and present particular digital media.

EP 2 595 077 A1 discloses a digital content lending system wherein a license may be transferred from a first device to a second device using NFC technology. Here, the first device requests a licence transfer from a centralized server and receives a unique identifier for the transfer. This unique identifier is transferred from the first device to the second device, which may then receive content from the first device or another server.

WO 2013/085517 A1 discloses a sub-licensing method between two devices wherein a number of usage restriction may be applied to the sub-licenses.

JP 2007 328398 A discloses an environment for temporarily sharing media streaming access rights among mobile devices wherein the shared license is only valid within the geographical or logical proximity of the granting device.

### SUMMARY

The invention is defined in the independent claims, while advantageous embodiments are set out in the dependent claims. Examples are disclosed for systems, methods and apparatus that utilize a first device to transfer limited rights associated with selected digital media to a second device to enable the subsequent access for streaming of the selected media for the second device. In the examples, a subscriber of a first digital media service may obtain transferable limited rights to selected media by initiating transfer of a token from the first digital media service to a first device. The token may then be transferred from the first device to a second device. Upon transfer of the token to the second device, a user of the second device may then use the token to access the selected media and direct streaming of the media according to the limited rights included in the token. The limited rights that are transferred may include various limitations on use such as, for example, proximity restrictions on where the first and/or second device must be located for the rights to remain valid, or, restrictions including time or usage limitations. Violations of the restrictions or reaching the limitations may result in the limited rights being terminated.

The selected media may be accessed by the second device to which the token was transferred by first accessing a second digital media service, of which the user of the second device is a subscriber, and sending the token to the second digital media service. The second digital media service may then send the token to the first digital media service where it originated. The first digital media service may then use the token to verify the limited rights, locate the selected media and activate streaming of the selected media to the second device or to another device as directed by the second device. Alternately, the selected media may be accessed from the second device by directly accessing the first digital media service using the token and the first digital media service may stream the selected media to the second device or to another device as directed by the second device.

This summary is provided to introduce a selection of concepts in a simplified form that are further described below in the Detailed Description. This summary is not intended to exclusively identify key features or essential features of the claimed subject matter, nor is it intended as an aid in determining the scope of the claimed subject matter.

### BRIEF DESCRIPTION OF THE DRAWINGS

FIGURE 1 illustrates an example system according to embodiments of the disclosure;
FIGURE 2A is a block diagram of an example computing device that may be implemented in the system of FIGURE 1;
FIGURE 2B is a block diagram of an example server that may be implemented in the system of FIGURE 1;
FIGURE 3A is a simplified diagram of the system of Figure 1 illustrating example signal exchanges according to the process of FIGURE 5A;
FIGURE 3B is a simplified diagram of the system of Figure 1 illustrating example signal exchanges according an alternative process of FIGURE 5A;
FIGURE 4A is a simplified diagram of the system of Figure 1 illustrating example signal exchanges according to the process of FIGURE 5B;
FIGURE 4B is a simplified diagram of the example system of Figure 1 illustrating example signal exchanges according to an alternative process of FIGURE 5B;
FIGURE 5A is a flow diagram illustrating example operations of a process for transferring limited rights in digital media;
FIGURE 5B is a flow diagram illustrating example operations of a further process for transferring limited rights in digital media; and,
FIGURE 5C is a flow diagram illustrating example operations of a process for determining validity of transferred rights in digital media;

### DETAILED DESCRIPTION

The system, method and apparatus will now be described by use of exemplary embodiments. The exemplary embodiments are presented in this disclosure for illustrative purposes, and not intended to be restrictive or limiting on the scope of the disclosure or the claims presented herein.

The technologies and techniques that are described herein provide a service which allows media and media collections to be shared between a first and second device and between services without the need to download the media itself, i.e., the files containing the media, to the first device and then transfer the media files to the second device. This may provide flexibility to users in different scenarios in which the users want to share media. Potential congestion that may be caused by downloading the media itself over cellular/WIFI channels or through social networks, or, using low band width short-range-RF interfaces, such as Bluetooth, in order to transfer the media directly between two devices is avoided. The users also may need to use less bandwidth at a lower cost and less wait may be necessary to play the selected media. The technologies and techniques described herein also may provide a method for expanding the media library of the second device, temporarily and subject to the limited rights, with media that the user of the second device may not want in their permanent library or want to concern themselves about later as far as storage or deletion. A subscriber of a cloud media service may also share media temporarily with the user of another device when the user of the other device is a subscriber of another service. The need for the user of the second device to interact with the first device user's media service for any licenses may also be removed as compared to situations where the media itself would be directly transferred. The subscriber may also share media when the other user is not able to obtain rights to the media for other reasons, such as when the user of the other device is a subscriber resident in another country where rights to the particular media cannot be obtained.

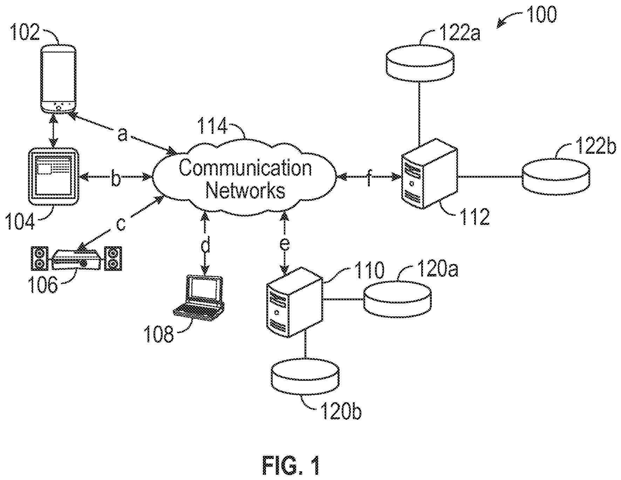

Referring now to FIGURE 1, therein is illustrated an example system 100 in which embodiments of this disclosure may be implemented. In FIGURE 1, system 100 is shown as including communication networks 114, a server 110 that is coupled to storage devices 120a and 120b, a server 112 that is coupled to storage devices 122a and 122b, computing device 102, computing device 104, laptop computer 108 and media device 106. Servers 110 and 112 are illustrated as single servers but each may be representative of server functions or server systems provided by one or more servers or computing devices that may be co-located or geographically dispersed. The term server as used in this disclosure, is used generally to include any computing devices or communications equipment that maybe implemented to perform the functions and processes of the disclosed embodiments. Servers 110 and 112 each may include one or more processors, or processing units, and memory, or other types of storage medium, including instructions in the form of code which when executed controls the server to implement the functions and processes of the example embodiments. The communications networks 114 provide connectivity for communications between computing device 102, computing device 104, laptop computer 108 media player 106, servers 110 and 112, and other devices that may be connected to communications networks 114. Communication networks 114 may include one or more internet protocol (IP) networks comprising routers and switches for routing internet traffic carried in IP data packets and is not limited to a particular type of network. For example, communications networks 114 may include one or more wide area networks (WANs) or one or more local area networks (LANs) implemented in LAN topologies using a protocol such, for example, as Ethernet, TCP/IP, Frame Relay, Ethernet, FTP, HTTP, or a similar protocol. Communication network 114 also may include one or more wireless or landline networks that provide the network interfaces shown at interfaces a-f, respectively, for computing device 102, computing device 104, media player 106, laptop computer 108 and servers 110 and 112 to communications network 114, so the various devices can communicate with each other over communication network 114. The wireless or landline networks of communications networks 114 that provide interfaces a-f may be comprised of any type of network that provides an appropriate network interface. For example interfaces a and b for computing device 102 and computing device 102 may be implemented on a wireless channel provided by a cellular network or on a wifi channel provided by a wifi access point of communications networks 114. Also, the interfaces c and d which interface to device 106 and laptop 108 may be implemented over wifi, and interfaces e and f to servers 110 and 112 may be implemented over high speed fiber optic cable that connect servers 110 and 112 to the one or more IP networks of communications networks 114. Also, communications network 114 may include a Public Switched Telephone Network (PSTN) having land-line and cellular telephone terminals, or a network featuring a combination of any of the above mentioned networks.

In the system of FIGURE 1, computing device 102 is configured to provide functions that allow a user of computing device 102 to request and receive a token associated with limited rights in selected media through a subscriber of a first digital media service and transfer the limited rights in the selected media defined by the token to an appropriately configured second device such as computing device 104. The selected media may then be accessed through computing device 104 subject to the limited rights. While computing device 102 is illustrated as implemented as an example smart phone and computing device 104 is illustrated an example tablet computer, each of computing devices 102 and 104 may be implemented as any type of computing device that may be configured with functionality supporting the processes disclosed herein, including, a portable tablet computer, a laptop or desktop personal computer (PC), a multimedia/gaming device, a smart television, home theater system, a smart automobile system, a smart house system, a multimedia cable/television box, a smart phone, a tablet device, a personal digital assistant (PDA), a portable media player, a smart watch, etc. Also, media player 106 and laptop computer 108 shown in the system of FIGURE 1 are exemplary media/computing devices and any other types of device capable of presenting or providing media in any form to a user may be used in place of media player 106 and laptop computer 108.

Users of computing device 102 and computing device 104 may be subscribers to digital media services hosted and provided by either of server 110 (service 1) or server 112 (service 2) that are capable are streaming digital media to users through streaming techniques and protocols such as, for example, User Datagram Protocol (UDP), Real Time Transport Protocol (RTP), Real Time Streaming Protocol (RTSP), Real Time Control Protocol (RTCP) and Transmission Control Protocol (TCP). Service 1 and service 2 may each be any type of digital media service providing services similar to, for example, Xbox Music, Spotify, Pandora, etc. Service 1 and service 2 may also be a combination or subset of a music service that is managed differently based on geographic location, for example, a music service with separate services for Europe and the United States.

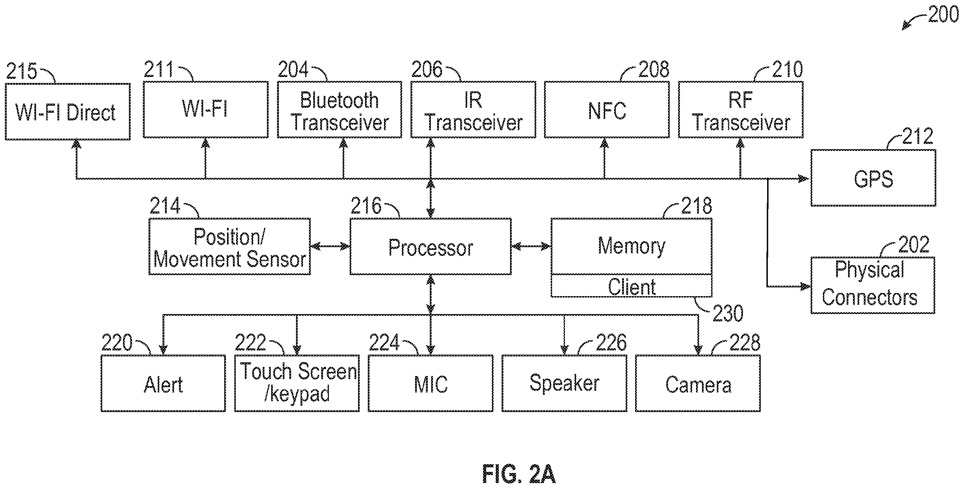

Referring now to FIGURE 2A, therein is an example block diagram of a computing device 200, according to which one or both of computing device 102 or computing device 104 of FIGURE 1 may be implemented. Various implementations of computing devices 102 and 104 may differ and may each include more or less functions than, or variations of, the functionality shown by the blocks in FIGURE 2A. Computing device 200 may include processor 216, which, while shown as one functional block, may be implemented by, and may comprise, one or more processors, and use of the term processer is meant to cover all such implementations. Computing device 200 also includes memory 218 which may be implemented as any type of storage in computing device 200, including non-volatile and volatile memory. Memory 218 includes instructions in the form of code for running the operating system and other applications in conjunction with processor 216 to control the operations of computing device 200. Memory 218 also may include data such as media data, camera photos and videos, contact data, calendar data, and other files used in the operation of computing device 200. Computing device 200 may also include a client, shown by the functional block 230 which is implemented by processer 216 and execution of code in memory 218. In an implementation of computing device 102 according to FIGURE 2A, processor 216, memory 218 and client 230 may be configured to control the device to implement media sharing functions and processes that are described herein for computing device 102. In an implementation of computing device 104 according to FIGURE 2A, processor 216, memory 218 and client 230 may be configured to control the device to implement media sharing functions and processes that are described herein for computing device 104. Client 230 may be configured as part of the operating system of computing device 200. In an alternative implementation client application 230 may be downloaded to computing device 102.

Processor 216 controls data reception and transmission over communication interfaces that may include, for example, physical connectors 202, Bluetooth transceiver 204, infrared (IR) transceiver 206, near field communications (NFC) function 208, RF transceiver 210, wifi interface 211 or wifi-direct interface 215. Processor 216 may also interface with and control global positioning service (GPS) receiver 212 and position/movement sensor 214. Position/movement sensor may include an accelerometer or gyroscope. RF transceiver 210 and wifi 211 may enable wireless communication and file transfer with other devices or networks, such as network 104 according to various communication technologies, such as, for example, LTE, CDMA, TDMA or GSM/UMTS cellular, and IEEE 802.11 wifi, or other wireless technologies. Bluetooth transceiver 204 provides short-range-RF communications with other Bluetooth or Bluetooth low energy (LE) capable devices. Wifi-direct interface 215 may also provide short range communication with other Wifi-direct capable devices and near field communications (NFC) function 208 provides short range communications capabilities with other devices equipped with NFC. Device movement and orientation may be sensed by position/movement sensor 214. External vibration and shock, such as tapping of computing device 200 may also be sensed by position and movement sensor 214 and may be utilized in conjunction with other functions of computing device 200, such as, for example, user interfaces or NFC to implement functions such as a tap and send function for transferring files to other NFC devices. Physical connectors 202 may be used to connect computing device 200 to an external device to enable data connections and transfer of data through a physical communication interface connection. Processor 216 may communicate with and control alert 220, which may be a vibrator or audio alert, a touch screen/keypad 222, a speaker 226, a microphone 224, and a camera 228. The touchscreen/keypad 222 may be implemented as a user interface, for example as a separate touchscreen or keypad, or as a touch screen, that may have a virtual keypad capability, and that may interact with client 230 and other functions of computing device 200 to allow a user to input commands and selections. The user may use touchscreen/keypad 222, for example, when device 200 is implemented as computing device 102 or 104, to manage and control interaction with services at servers 110 or 112 or to manage communications on appropriate communications interfaces with the services and other devices in the system according to the processes described herein. The various alternative implementations of user interfaces that may also be used in the processes described herein also include interfaces, such as a natural user interface (NUI) using, for example, audio/speech recognition, gesture sensing or recognition, device movement or motion sensors, or interfaces using camera image recognition, bar code recognition, or any other type of interface by which a user may provide input to and/or receive output and information from computing device 200.

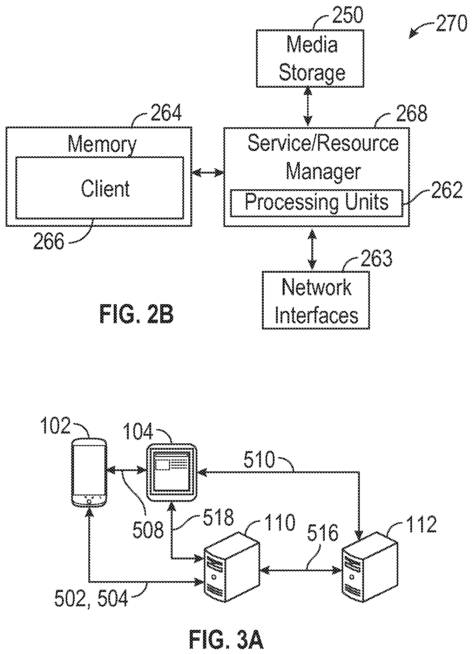

Referring now to FIGURE 2B, therein is illustrated an example block diagram of a server according to which one or both of server 110 or server 112 of FIGURE 1 may be implemented. Various implementations of server 110 or 112 may differ and may each include more or less functions than, or variations of, the functionality shown by the blocks in FIGURE 2B. Server 270 includes media storage 250, network interfaces 263, service/resource manager 268, and memory 264. Service/resource manager 268 may include processing unit 262 and memory 264 may include client 266. Processing unit may comprise one or more processors or processing units. Network interfaces 263 may comprise any type of interface that provides capability to server 270 to communicate and exchange data with other devices and servers over networks, such as communications networks 104. Memory 266 may be implemented as any type of storage, including non-volatile and volatile memory. Memory 266 includes instructions in the form of code for the managing services and resources of a media service and performing other functions in conjunction with service/resource manager 268 and processing unit 262 to control the operations of server 270. In an implementation of server 110 according to FIGURE 2B, service/resource manager 268, processing unit 262, memory 264 and client 266 may be configured to control the server to implement the media sharing functions and process operations that are described herein for server 110. In an implementation of server 112 according to FIGURE 2B, service/resource manager 268, processing unit 262, memory 264 and client 266 may be configured to control the server to implement the media sharing functions and process operations that are described herein for server 112.

The example embodiments disclosed herein may be described in the general context of processor-executable code or instructions stored on memory that may comprise one or more computer readable storage media (e.g., tangible non-transitory computer-readable storage media such as memory 218 or 366). As should be readily understood, the terms "computer-readable storage media" or "non-transitory computer-readable media" include the media for storage of data and program instructions, such as memory 218, and do not include propagated or modulated data communication signals.

While the functionally disclosed herein has been described by illustrative example using descriptions of the various components and devices of embodiments by referring to functional blocks and processors or processing units, and memory including instructions and code, the functions and processes of the embodiments may be implemented and performed using any type of processor, circuitry or combinations of processors and/or circuitry and code. This may include, at least in part, one or more hardware logic components. For example, and without limitation, illustrative types of hardware logic components that can be used include field programmable gate arrays (FPGAs), application specific integrated circuits (ASICs), application specific standard products (ASSPs), system-on-a-chip systems (SOCs), complex programmable logic devices (CPLDs), etc.

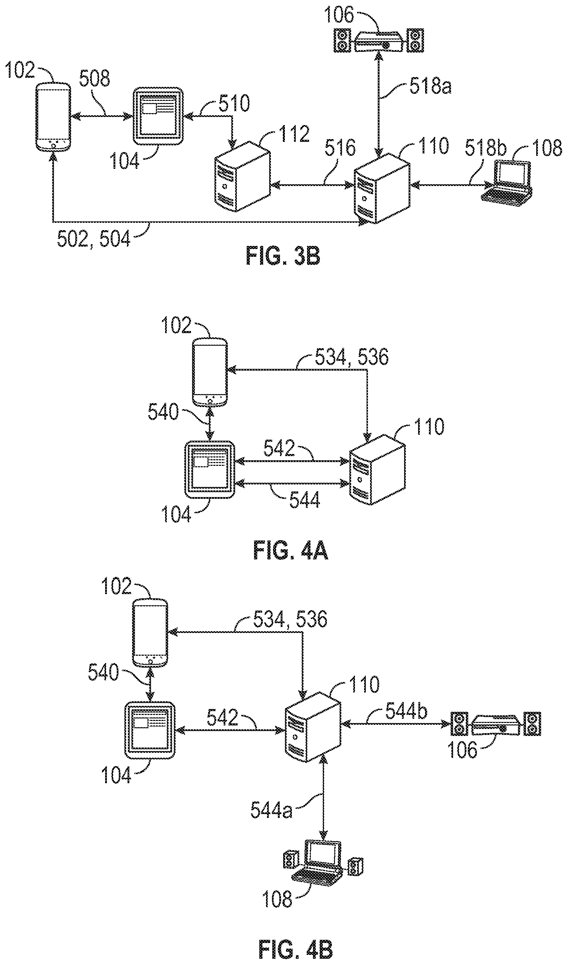

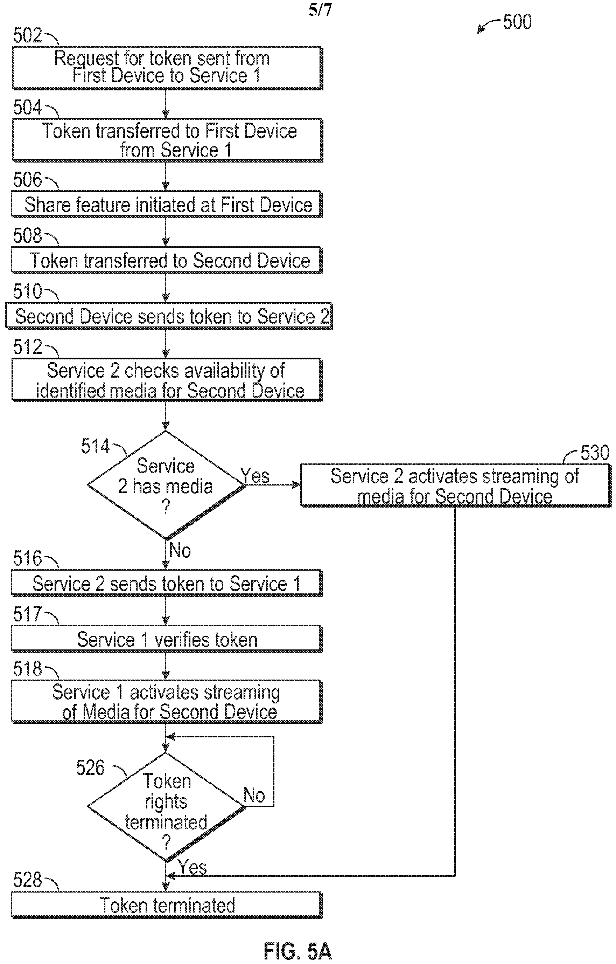

Referring now to FIGURE 5A, therein are illustrated example operations of a process for transferring limited rights in selected media of digital media between a first and second device and utilizing the limited rights at the second device in accordance the embodiments. FIGURES 3A and 3B show simplified diagrams of the example system of Figure 1 illustrating signal exchanges within system 100 in accordance with the process of FIGURE 5A. The process of FIGURE 5A may be described with reference to FIGURES 3A and 3B, where the signal exchanges between the devices are indicated in FIG. 3A and 3B by reference numbers 502,504, 508, 510,516 and 518 (or 518a and 518b) common with FIG. 5A. The reference numbers of FIGURES 3A and 3B correlate with like numbered operations in the process of FIGURE 5A. For example, the signal exchange indicated by reference number 508 between computing device 102 and computing device 102 in FIGURE 3A and 3B is done during operation 508 of the process of FIGURE 5A. FIGURES 3A and 3B illustrate identical processes except that the devices receiving the streaming of the selected media at signal exchange 518 differ. FIGURE 5A will be described using the example of the user of computing device 102(as the First Device) being a subscriber to service 1 provided by server 110 and the user of computing device 104(as the Second Device) being a subscriber to service 2 provided by server 112.Computing device 102 and computing device 104 include and implement functions for performing the operations shown in FIGURE 5A, including the appropriate interfaces, processors and code, as was described in relation to exemplary FIGURE 2A. Also, server 110 and server 112 include and implement functions for performing the operations shown FIGURE 5A as was described in relation to FIGURE 2B. The term 'a subscriber' of a media service is used generally in this disclosure to mean any kind of user that has an account with or is otherwise able to access and utilize the services of the media service.

Referring again to FIGURE 5A, the process begins at 502 where the user of computing device 102 communicates a request from computing device 102 to server 110 (service 1) requesting transferable limited rights to access selected media of digital media. For example, the user of computing device 102 and user of computing device 104 may be located in an area of proximity with one another in a situation in which the user of computing device 104 is using computing device 104 to play music to other persons in the area. In that situation the user of computing device 102 may decide that he would like to play some selected media, which, for example, may comprise a song or a playlist of songs, to the guests through a better media player having better audio quality audio than is included in computing device 102. In this case the user of computing device 102 may desire to have the music played by computing device 104 as the player itself, or as a source and/or controller for a media player such as nearby media player 106 that it may play audio through using, for example, Bluetooth or wifi direct. While a song or playlist of songs is used here as an example, the selected media may also be any other media including, for example, an album, a video, an audio cast, etc. The user of computing device 102 may generate the request, for example, while logged on to the users account on or by accessing the user's account on service 1. The user of computing device 102 is provided with UI interfaces on computing device 102 for interacting with service 1 that allow the user to define and select desired pieces or of multimedia or groups or collections of digital media, for example, individual songs or a playlist or group of songs, for which the transferable limited rights are desired to be shared and generate the request.

The interaction with system 1 at 502 may also include for example, defining, selecting and requesting the scope of limited rights in the desired digital multimedia if optional choices are offered by service 1. The limited rights may include various limitations on use of the selected multimedia. For example, the rights to stream the selected media may be restricted to a certain time period in which the rights are valid, or restricted to use on a particular type of device for playback or restricted a certain type of streaming quality. The limited rights may also include a limit on the allowed amount of usage, for example, a restriction that the selected media may be played only once or a predetermined number of times. The transferable limited rights may also be limited by proximity restrictions related to the geographic location or location of one or both of the first and second devices while the rights are being used. For example, the limited rights may require that the computing device 102 and any device, such as computing device 104, to which computing device 102 transfers the token remain within a certain proximity of one another, or one or both of the devices remain within a selected distance from a point related to the location of the transfer, after the information is transferred to the second device. The limited rights may also include rights that remain valid until specifically revoked, for example, by the requesting user or by service 1. Enforcement of the limited rights may be performed by service 1, or, one or both of the computing devices, or service 1 in conjunction with one or both of the computing devices. For example, service 1 may enforce the validity restrictions such as time/use rights and one or both of the devices may be configured to enforce the proximity restrictions.

In one example, the user of computing device 102 selects the desired music as the selected media to which it is desired to share limited rights and communicates the request to service 1 through communication networks 114 at 502. Server 110 receives the request and the service resource manager of server 110 generates a token in response to the request. At 504 server 110 sends the token is sent back to computing device 102. In the embodiment of FIGURE 5A, the token may comprise a media identification (ID), the address, and the authentication information. The media ID may be a unique ID for service 1, for example a ZuneID, that identifies the particular selected media associated with the token. The address indicates an address of a location in system 100 at which the selected media can be found. This address may identify service 1 or a portion of service 1 implementing the functions associated with the token. The authentication information may include information that can be used to identify and/or verify that the rights associated with the token are valid and authorize the use. The term token as used herein in this disclosure, including the claims, may comprise various configurations of information and data used to realize the limited rights in the selected media. Information and data may be added to or removed from the token as it is used and transferred in the processes of the embodiments. Also various information may be sent separately or accompany the token in the processes. In another implementation, for example, the token may include an address that identifies the location or a link to a unique file containing only the selected media. In this implementation the address may serve the purpose of the media ID in that it allows identification of the selected media when the file pointed to by the address is accessed.

At 504, computing device 102 receives the token in response to its request. At 506, in order to transfer the token to computing device 104, the user of computing device 102 may initiate a share function that may be controlled by the client application function on computing device 102.The client application function may use a short range interface to transfer the token. For example, the user may be provided "tap and send" feature to transfer the token from computing device 102 to computing device 104 using NFC to initiate the transfer. The user of computing device 102 uses the client application and the user interface to select the token for transfer through tap and send. When the tap and send feature is activated, the client prompts the user to tap computing device 102 to computing device 104.

Steps 502 - 506 may also be implemented in a combined manner so that the tap and send feature is activated automatically upon the request for limited rights being sent from computing device 102 to service 1. In this, example alternative, the user may be prompted to tap computing device 102 to computing device 104 upon receipt of the token from service 1.

At 508, upon tapping the devices together, the devices communicate through NFC and computing device 104 is required to authorize the transfer. This may be done, for example, by prompting the user of computing device 104 to accept or deny the transfer. Once authorized the token may be transmitted to computing device 104 through NFC, or a data channel provided on another interface, and computing device 104 receives the token. The transmission may be done using, for example, transport level security or mutually authenticated security. As part of the process at 508, computing device 102 may send location data to service 1 informing service 1 of the location of computing device 102 and computing device 104 at the time of transfer of the token for use in proximity determinations used subsequently in the process. Alternatively, service 1 may be informed of the location by another means.

The transfer of the token from service 1 to computing device 102 and, from computing device 102 to computing device 104, as illustrated by example operations 502-508, may also be performed by any other process or combination of appropriate processes. For example, a web application on computing device 102 and computing device 104, or, a web site accessed by computing device 102 may be used to process inputs from the users of the devices and provide the appropriate network communications between server 110 and computing devices 102 and/or computing device 104 to implement transfer of the token.

Also, the transfer of the token between the two devices 102 and 104 may be done by other methods than NFC. For example, alternative wireless protocols, such as Bluetooth, infrared (IR), wifi, wifi-direct, or a direct physical connector such as a universal serial bus (USB) connection, etc., may be used. In other alternatives, the transfer of the token from computing device 102 to device 104 may also be performed through a network, such as the communications networks 114, using, for example, RF data channels or wifi connections.

At 510, the user of computing device 104 accesses service 2, of which the user of computing device 104 is a subscriber, through communications network 114. Service 2 may be accessed by computing device 104 using the user's logon credentials to logon and access the user's subscriber account on service 2 and send the token to service 2 through the user's subscriber account. Playlist ordering information indicating the play out order of the selected media may also be added and sent with the token from computing device 104. The playlist ordering information may include a new playlist comprising the selected media or playlist ordering information that is used to modify or augment an existing playlist of the user of device 104 based on the selected media. At 512, service 2 checks the media ID of the selected media to determine if service 2 has the particular media available itself for the user of computing device 104. If service 2 has the selected media available the process moves to 530. Service 2 may recognize the media ID for example, if service 1 and service 2 are using media IDs for specific media that are defined in a universal library or repository that may be stored on a central server accessible to both services. Alternatively, service 1 and service 2 may have an agreement that implements mutually recognizable media IDs that may be used for transferring limited rights between service 1 and service 2. Also, in alternative implementations, each of service 1 and service 2 may use their own unique media IDs that may be unrecognizable to each other. In these implementations, the determination at 514 may be or, alternately, may not be performed as part of the process since service 2 may not likely be able to recognize the media ID from service 1. In that case the process may move from 512 to 516 without performing a determination at 514. Referring again to the process of FIGURE 5A, if service 2 determines that it does not have the selected media identified by the media ID or, alternately, does not attempt a determination of whether it has the media, the process moves to 516. At 516, service 2 may access service 1 through an internet API that is configured to communicate with service 1 and sends the token to service 1. This supplies a secure connection between service 1 and service 2 as trusted partners in implementing the embodiment with each other. At 517, service 1 may use the authentication information to verify the validity of the token. Service 1 may then use the media ID to identify the selected media and address to locate the selected media. A 517 a determination may also be made as to whether or not any events have occurred that would cause service 1 to terminate the token. These may include, for example, an occurrence of failed trust between the entities communicating the token which may include, for example, a loss of access to service 1 by the user of computing device 102 caused by subscription expiration for lack of payment or otherwise. This would cause a lack of trust for both computing devices 102 and 104 from service 1. The token may also be determined invalid if there has been a loss of the license or rights to the selected media by service 1. User of device 102 also may have already actively terminated the token, for example the user may decide they don't want to share the media any longer. Additionally, at 517 it may be determined that other events already have violated the limited rights granted to the media and cause service 1 to terminate the token. For example a time use expiration date or proximity restriction violation may have already occurred by the time service 1 is accessed.

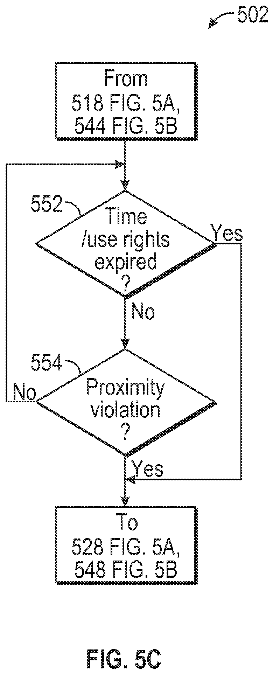

At 518, once computing device 104 has been allowed temporary access to service 1 and the token has been validated, service 1 activates streaming of the selected media for computing device 104 as host. Computing device 104 may interact with service 1 in order to direct how the streaming is done. Service 1 may push the selected media to computing device 104 and the selected media may be streamed and played by computing device 104 as shown by signal exchange 518 in FIGURE 3A. Alternatively, service 1 may stream the selected media as directed by computing device 102 to another device in an appropriate location, such as media player 106 or laptop 108, as shown by signal exchanges 518a and 518b in FIGURE 4B. In one implementation, computing device 104 would already have an open channel of communication or a method of transmitting data (e.g. Media information, or media files themselves) to media player 106 or laptop 108. Using this same channel, computing device 104 would transmit the token to media player 106 or laptop 108, contingent on any permissions (e.g., Service 1 could block the use of a third device, or the specific use of a type of media player as regards the limited rights). Media player 106 or laptop 108 may then communicate with service 1. Additionally, Computing device 104 would still need to meet any proximity criteria, otherwise it will be responsible for revoking the authorization from media player 106/laptop 108 to comply with the licensing. The computing device 102 may send regularly scheduled "keep awake" signals to the media player 106/laptop 108 or to the server to maintain validation that all licensing restrictions, such as proximity or device usage are still being respected as will be discussed in relation to FIGURE 5C. Whether or not the other device is in an appropriate location or is an allowed type device for playback may be defined within the limited rights in the selected media.

At 526, as service 1 is streaming the selected media for host computing device 104, relevant data related to computing device 102, computing device 104 and other relevant data related to the limited rights in the selected media is checked and/or monitored to determine if the limited rights have been or should be terminated.

Referring now to FIGURE 5C, therein are illustrated example operations of a process 502 for determining validity of transferred rights in digital media. The process of FIGURE 5C may be performed at 526 of FIGURE 5A. Process 502 is entered as streaming of the selected media has been activated for computing device 104 at 518 of FIG. 5A. As indicated, the streaming may be to computing device 104 or as directed to another device as directed by computing device 104. At 552 it is determined if time limitations or other use rights associated with the selected media have expired. These use rights may include any rights associated with the token and described in relation to the token request and transfer at 502 of FIGURE 5A. For example, time limitations on the validity of the rights after they are transferred to the user of computing device 102, or to the user of computing device 104, usage limitations on the amount of use associated with the rights, such as the right to only play the selected media a predetermined number of times, etc,. The determinations made at 552 may also include, for example, determining if the user of computing device 102 has proactively terminated the rights by communicating with service 1. The determinations also may include an occurrence of failed trust, i.e., bad certificate between computing device 102 and service 1, loss of access to service 1 by the user of device 1, for example if the user of device 1's subscription expires or, loss of license to the selected media by service 1. If it is determined at 552 that time/use rights have expired, the process moves to 548 of FIG. 5A and service 1 terminates the limited rights in the selected media and stops streaming of the selected media for computing device 102. If it is determined at 552 that time/use rights have not yet expired, the process moves to 554.

At 554 it is determined if a proximity violation of the limited rights in the selected media has occurred. A proximity violation may include a violation of any proximity related restrictions These proximity restrictions may include any proximity restrictions associated with the token and described in relation to the token request and transfer at 502 of FIGURE 5A.

Various implementations may be used to realize the determination at 554. A proximity violation may be determined from any appropriate method. This may include, for example, use of Wifi access points or beacons, use of short range signal strength measurements such as, for example, Bluetooth, Bluetooth LE, infrared, wifi-direct, or NFC signals, GPS location methods, cellular triangulation location methods, or a method that combines data from two or more of these location determination methods may be used. In one implementation the proximity determination may be implemented by measuring short range signal strength between computing device 102 and computing device 104, or between another device and one or both of computing devices 102 and 104. One or both of computing devices 102 and 104 may configured to participate in the determination of a proximity violation by exchanging and/or processing signals with the other devices. When the signal strength falls below a predetermined level because of movement of a device, or of movement of more than one of the devices, a proximity violation may be detected. In another implementation a location may be determined, for example, by the location of computing device 102 or computing device 104, or an associated nearby location point, at the time of the transfer of the token between the two devices. If one or both of the devices moves beyond a certain range of the location a proximity violation may be detected and the token then terminated.

Geographical fencing or geo-fencing may be used to define areas around, and in relation to, the location of transfer of the token. For example, the boundaries could be defined by a circle centered on the location of the point of transfer as a geo-fencing position. For example, upon transfer of the token, the client 230 in mobile device 1 may inform service 1 of the location of the transfer as a geo-fencing position. When computing device 102 leaves the area of the social gathering and moves beyond the boundary defined by the circle, i.e., moves beyond the predetermined distance from the geo-fencing position, location data sent to service 1 from computing device 102 will allow service 1 to determine that it may terminate the token. Also the movement of computing device 102 beyond the boundary defined by the circle and location data on computing device 102 sent to service 1 may also allow service 1 to determine that it may terminate the token. As a further example one or both of the devices 102 or 104 may track location of the computing device 102 or 104 in relation to the geo-fencing, determine that the device has moved beyond the boundaries and, then, send a termination signal to service 1 indicating the token should be terminated.

When it has been determined at 526 (through the process of FIG. 5C) that the limited time/use rights in the selected media have expired or a proximity violation of the rights has occurred, the process moves to 548 and service 1 terminates the token and stops streaming of the selected media. Enforcement of the limited rights described in FIGURE 5C may be performed by service 1 at server 110, by one or both of the computing devices 102 or 104, or by service 1 in conjunction with one or both of the computing devices. For example, service 1 may enforce the validity restrictions at server 110 such as time/use rights and one or both of the computing devices 102 and 104 may be configured to enforce the proximity restrictions. One or more of computing device 102, computing device 104, server 110 and server 112 may be configured to generate data for processing and making the determination, or for communicating the data between one another in order that the enforcing device or server may use the data to perform the determination and terminate the token.

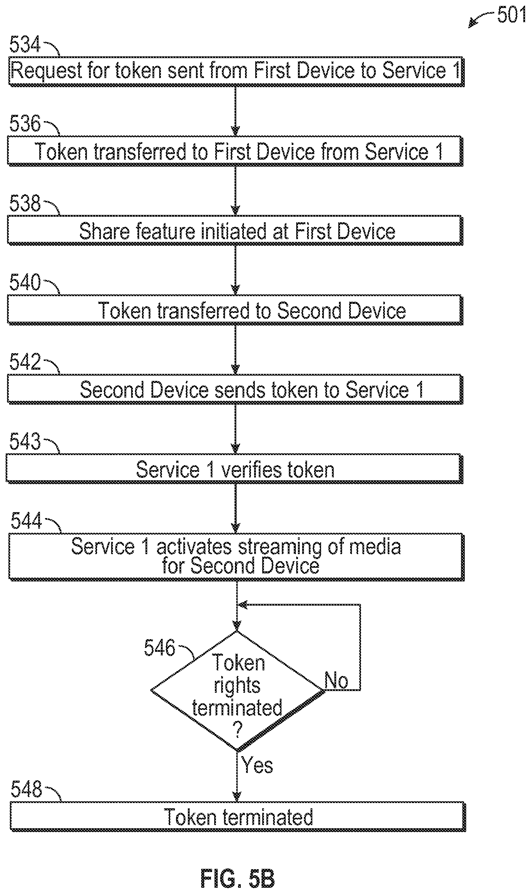

Referring now to FIGURE 5B, therein is a flow diagram illustrating example operations of an alternative process for transferring limited rights in digital media between two devices in accordance with a further example. FIGURE 5B shows an example in which the system is configured so that the token transferred from computing device 102(First Device) to computing device 104(Second Device) allows the user of computing device 104 to directly access service 1. The user of computing device 104 is not required to go through their own account on service 2 in order to access service 1 for the selected media. The example of FIGURE 5B may provide a more secure alternative for service 1, relative to service 2, since service 2 does not have access to service 1's media information that passes through service 2 in the embodiment of FIGURE 5A. FIGURE 5B may be described in conjunction with FIGURES 4A and 4B. FIGURES 4A and 4B show simplified diagrams of the example system of Figure 1 illustrating signal exchanges within system 100 in accordance with the example of FIGURE 5B. The process of FIGURE 5B may be described with reference to FIGURES 4A and 4B, where the signal exchanges that are indicated by reference numbers 534, 536, 540, 542, and 544 (or 544a and 544b) correlate with like numbered operations in the process of FIGURE 5B. FIGURES 4A and 4B illustrate identical processes except that the signal exchanges indicated by 544,544a and 544b when streaming is activated at 544 of FIGURE 5B differ. The example will be described using an example having the user of computing device 102 being a subscriber to service 1 provided by server 110.

The process of FIGURE 5B begins at 534 where the user of computing device 102 communicates a request from computing device 102 to server 110 (service 1) requesting transferable limited rights to access selected media of digital media. For example, the user of computing device 102 and user of computing device 104 may both be at a social gathering situation similar to the social gathering described in relation to FIGURE 5A and the user may desire to have the selected media played by computing device 102 as the player itself, or as a controller and/or source for a media player such as nearby media player 106, rather than on the user's own computing device 104. The user of computing device 102 may initiate the request and obtain the token, for example, while logged on to the users account by accessing service 1 through a client application function implemented in the operating system of computing device 102, or by a client application that has been downloaded to computing device 102, or by using a web application or web site, as was described in relation to FIGURE 5A.

Operations 534, 536, 538 and 540 of FIGURE 5B may be performed in a manner similar, respectively, to those at 502, 504, 506 and 508 of FIGURE 5A, with a difference being that the token that is transferred to computing device 102 at 540 from service 1 is configured to allow the user of computing device 102 to directly access service 1 rather than going through the user's account on service 2 to access service 1. The user of computing device 102 may access service 1 at 542.

At 542, the user of computing device 104 accesses service 1 by sending the token to server 110. Computing device 104 may send the token to service 1 using a feature configured in service 1 and a client application that allows a device to access service 1 and to use the limited rights in the selected media. The authentication information in the token generated by service 1 may contain access rights information, for example, in the form of a certificate or a key, that allows and provides this access for a limited purpose. At 543, once access is confirmed service 1 may also verify the rights in the token for the selected media using the authentication information. The verification at 543 may include, for example, those verifications described as performed in the token verification operation 517 of FIGURE 5A.

At 544, once the token has been validated and computing device 104 has been allowed temporary access to service 1, service 1 activates streaming of the selected media for computing device 104 as host. Playlist ordering information may also be sent by computing device 104 indicating the order of play of the selected media. Service 1 uses the media ID to identify the selected media and address to locate the selected media. Service 1 then pushes the selected media to computing device 104 and the selected media is streamed and played as directed by computing device 104 as shown by signal exchange 544 in FIGURE 4A. Alternatively, service 1 may stream the selected media as directed by computing device 104 to another device in an appropriate location, such as media player 106 or laptop 108, as shown by signal exchanges 544a and 544b in FIGURE 4B. Whether or not the other device is in an appropriate location to allow the directed streaming may be determined by the limited rights in the selected media such as, for example, by proximity restrictions. At 546, as service 1 is streaming the selected media for host computing device 104, relevant data related to computing device 102, computing device 104 and other relevant data related to the limited rights in the selected media is checked and/or monitored to determine if the limited rights have been or should be terminated. The determination at 546 may be performed according to the process shown in FIGURE 5C. This is similar to as was described in relation to FIGURE 5C and step 526 of the embodiment of FIGURE 5A, with a difference being the process of FIGURE 5C is entered from 544 and exits to 548 when used in the example of FIGURE 5B.

When it is determined at 546(through the process of FIG. 5C) that the limited time/use rights in the selected media have expired or a proximity violation of the rights has occurred, service 1 terminates the token at 548 and service 1 stops streaming of the selected media.

In alternative implementations of the processes of FIGURES 5A or 5B, where service 1 activates streaming of the selected media at 518 or 544, respectively, service 1 may stream the selected media to service 2, instead of directly to computing device 104 or as directed by computing device 104, and service 2 may then stream the selected media to computing device 104 or as directed by computing device 104.

Although the subject matter has been described in language specific to structural features and/or methodological acts, it is to be understood that the subject matter defined in the appended claims is not necessarily limited to the specific features or acts described above. Rather, the specific features and acts described above are disclosed as example embodiments, implementations, and forms of implementing the claims and these example configurations and arrangements may be changed significantly without departing from the scope of the invention as defined in the claims. Moreover, although the example embodiments have been illustrated with reference to particular elements and operations that facilitate the communication process, these elements, and operations may be replaced by any suitable devices, components, architecture or process that achieves the intended functionality of the embodiment. Numerous other changes, substitutions, variations, alterations, and modifications may be ascertained to one skilled in the art and it is intended that the present disclosure encompass all such changes, substitutions, variations, alterations, and modifications as falling within the scope of the appended claims.

## Claims

1. A server (110) providing a first media service comprising:
a processor and memory including code, the code executable to cause the processor to control the server to:
receive a request from a first device (102), being a subscriber to said first media service, for limited rights to stream selected media from a media service to a second device (104), being a subscriber to a second media service, provided by a second server;
generate a token, wherein the token comprises data that enables streaming of the selected media from said first or second media service subject to the limited rights;
transfer the token to the first device (102);
receive the token from said second server, and verify the token based on authentication information comprised in said token;
activate streaming of the selected media to the second device (104); wherein the code is further executable to control the server to:
measure short range signal strength between the first device (102) and the second device (104); and
terminate the token and stop streaming of the selected media, in response to the short range signal strength falling below a predetermined level.

2. The server (110) of claim 1, wherein the request for limited rights includes a time limitation.

3. The server (110) of claim 1, wherein the request for limited rights includes a restriction that the selected media may be played only a predetermined number of times.

## Patentansprüche

1. Server (110), der einen ersten Mediendienst bereitstellt und der Folgendes umfasst:
einen Prozessor und einen Speicher einschließlich eines Codes, wobei der Code ausführbar ist, um zu bewirken, dass der Prozessor den Server zu Folgendem steuert:
Empfangen einer Anforderung von einer ersten Vorrichtung (102), die ein Teilnehmer des ersten Mediendienstes ist, für begrenzte Rechte zum Streamen ausgewählter Medien von einem Mediendienst zu einer zweiten Vorrichtung (104), die ein Teilnehmer eines zweiten Mediendienstes ist, der durch einen zweiten Server bereitgestellt wird;
Erzeugen eines Tokens, wobei der Token Daten umfasst, die das Streamen der ausgewählten Medien von dem ersten oder zweiten Mediendienst gemäß den begrenzten Rechten ermöglichen;
Transferieren des Tokens an die erste Vorrichtung (102) ;
Empfangen des Tokens von dem zweiten Server und Verifizieren des Tokens basierend auf Authentifizierungsinformationen, die in dem Token enthalten sind;
Aktivieren des Streamens der ausgewählten Medien zu der zweiten Vorrichtung (104);
wobei der Code ferner ausführbar ist, um den Server zu Folgendem zu steuern:
Messen einer Kurzreichweitensignalstärke zwischen der ersten Vorrichtung (102) und der zweiten Vorrichtung (104); und
Beenden des Tokens und Stoppen des Streamens der ausgewählten Medien als Reaktion darauf, dass die Kurzreichweitensignalstärke unterhalb eines vorbestimmten Niveaus abfällt.

2. Server (110) nach Anspruch 1, wobei die Anforderung für begrenzte Rechte eine Zeitbegrenzung beinhaltet.

3. Server (110) nach Anspruch 1, wobei die Anforderung für begrenzte Rechte eine Begrenzung beinhaltet, dass die ausgewählten Medien nur eine vorbestimmte Anzahl an Malen abgespielt werden können.

## Revendications

1. Serveur (110) procurant un premier service multimédia comprenant :
un processeur et une mémoire incluant du code, le code étant exécutable pour amener le processeur à piloter le serveur pour :
recevoir une demande en provenance d'un premier dispositif (102) représentant un abonné au dit premier service multimédia, pour des droits limités de diffusion en continu du média, sélectionné à partir d'un service multimédia, vers un second dispositif (104) représentant un abonné à un second service multimédia procuré par un second serveur,
générer un jeton, le jeton comprenant des données qui autorisent la diffusion continue du média sélectionné à partir dudit premier ou dudit second service multimédia soumis aux droits limités,
transférer le jeton au premier dispositif (102),
recevoir le jeton provenant dudit second serveur et vérifier le jeton sur la base d'informations d'authentification comprises dans ledit jeton,
activer la diffusion continue du média sélectionné vers le second dispositif (104),
dans lequel le code est en outre exécutable pour piloter le serveur pour :
mesurer l'intensité du signal à courte portée entre le premier dispositif (102) et le second dispositif (104), et
refermer le jeton et arrêter la diffusion continue du média sélectionné en réponse à la chute de l'intensité de signal à courte portée en dessous d'un niveau prédéterminé.

2. Serveur (110) selon la revendication 1, dans lequel la demande pour des droits limités inclut une limitation dans le temps.

3. Serveur (110) selon la revendication 1, dans lequel la demande pour des droits limités inclut une restriction indiquant que le média sélectionné ne peut être reproduit qu'un nombre prédéterminé de fois.
